# EUROPÄISCHE PATENTSCHRIFT

(11) **EP 3 194 237 B1**
(45) Veröffentlichungstag und Bekanntmachung des Hinweises auf die Patenterteilung: **10.04.2019**
(21) Anmeldenummer: 15766069.7
(22) Anmeldetag: 27.08.2015
(51) Int. Cl.: B61G 5/10, H02G 3/32

(54) **WAGENÜBERGANGSSYSTEM ZUR FÜHRUNG WENIGSTENS EINES VERSORGUNGSKABELS UND KLEMMTEIL FÜR EIN SOLCHES WAGENÜBERGANGSSYSTEM**
CARRIAGE COUPLING SYSTEM FOR GUIDING A CABLE AND CLAMP ELEMENT FOR SUCH A CARRIAGE COUPLING SYSTEM
SYSTÈME D'ACCOUPLEMENT DE WAGONS POUR GUIDER UN CÂBLE ET ÉLÉMENT DE CLIPAGE POUR UN TEL SYSTÈME

(30) Priorität: 19.09.2014 DE 102014218944
(43) Veröffentlichungstag der Anmeldung: 26.07.2017
(73) Patentinhaber: LEONI Kabel GmbH, 90402 Nürnberg (DE)
(72) Erfinder: RITTHAMMER, Marcus, 91166 Georgensgmünd (DE); SUNDBERG, Conny, 82377 Penzberg (DE)
(74) Vertreter: FDST Patentanwälte
(86) Internationale Anmeldenummer: PCT/EP2015/069596
(87) Internationale Veröffentlichungsnummer: WO 2016/041759

(56) Entgegenhaltungen:
- DE-A1- 19 705 895
- DE-A1-102006 034 303
- DE-C- 682 495
- FR-A1- 2 713 183
- US-A- 1 526 286
- US-A1- 2014 273 612

## Beschreibung

Die Erfindung betrifft ein Wagenübergangssystem zur Führung wenigstens eines Versorgungskabels, mit einem Klemmteil, das zumindest eine Durchführung für das Versorgungskabel aufweist. Weiterhin betrifft die Erfindung ein Klemmteil insbesondere für ein solches Wagenübergangssystem.

Ein solches Wagenübergangssystem ist beispielsweise in der DE 10 2006 034 303 A1 beschrieben.

Insbesondere im Bahnbereich werden zur Überführung von Versorgungskabeln zwischen zwei Wagen eines Zuges sogenannte Wagenübergangssysteme verwendet, die das Versorgungskabel von einem zum anderen Wagen führen. Das Versorgungskabel ist hierbei beispielsweise ein Kabel zur Leistungsübertragung, insbesondere im Kilovoltbereich oder ein Daten- oder Signalkabel. Das Versorgungskabel ist dann über dessen Enden jeweils an einem geeigneten Anschlusspunkt elektrisch angeschlossen. Dabei ist es auch möglich, dass mittels eines Wagenübergangssystems mehrere Versorgungskabel geführt werden.

Ein Wagenübergangssystem stellt weiterhin auch eine flexible Verbindung derart dar, dass eine relative Bewegung der beiden Wagen zueinander ermöglicht wird. Um dabei eine nachteilige mechanische Beanspruchung der Anschlusspunkte des Versorgungskabels zu vermeiden, werden zur mechanischen Fixierung insbesondere Klemmteile verwendet, mit einer Anzahl von Durchführungen, in denen das Versorgungskabel eingeklemmt ist und welche eine mögliche Krafteinwirkung aufnehmen. Hierbei ist es jedoch möglich, dass das Versorgungskabel bei entsprechender Beanspruchung gegen Kanten des Klemmteils gedrückt wird und auf diese Weise eine punktuelle Belastung erfährt, die insbesondere bei wiederholtem Auftreten möglicherweise zu Abrieb am Mantel des Versorgungskabels führt oder sogar zu einer Beschädigung des Versorgungskabels.

Die CN 2014 239 30 zeigt beispielsweise ein Wagenübergangssystem, bei dem zwei Spiralkabel mittels eines Klemmteils gehaltert sind, wobei das Klemmteil zwei im Wesentlichen quaderförmige Backen umfasst, in welche die Spiralkabel eingeklemmt sind. Dabei sind die Spiralkabel zwischen den beiden Backen derart eingequetscht, dass zwischen Backen ein Spalt ausgebildet ist.

In der DE 10 2006 034 303 A1 ist beispielsweise eine Vorrichtung zur Führung von Versorgungskabeln bei einem Wagenübergangssystem beschrieben, bei der in einem Klemmklotz mehrere Versorgungskabel durch Kabeldurchführungen einzelweise geführt sind. Der Klemmklotz ist hierbei zudem als Kunststoff-Spritzgussteil ausgebildet, wodurch es auf einfache Weise möglich ist, den Durchmesser einer jeweiligen Kabeldurchführung an den Durchmesser des Versorgungskabels anzupassen, um eine möglichst optimale Klemmwirkung zu erzielen. Um dennoch eine Biegebewegung in Querrichtung des Versorgungskabels zu erlauben, weist der Klemmklotz in einer Weiterbildung eine konische Kabeldurchführung auf.

In der DE 196 14 427 A1 ist ein Koppelverbinder beschrieben. Bei diesem sind die Spiralkabel endseitig an einen Stützteller angeschlossen. Dazu sind die Kabelenden mit einer Kabelklemme am Stützteller festgesetzt, sodass die jeweils endseitige Wendel eines Kabels am Stützteller anliegt. Zusätzlich sind die Kabel auf diese Weise auch elektrisch mit dem Stützteller verbunden. Die Stützteller sind senkrecht zur Längsrichtung ausgerichtet, also grob in etwa parallel zu den Wendeln der Kabel und die Kabelenden liegen plan am jeweiligen Stützteller an.

In der DE 197 05 895 A1 wird ein Schienenfahrzeug beschrieben, mit zwei über ein längsmittiges Gelenk gekuppelten Wagen und mit Stützhaltern für mehrere von einem zum anderen Wagen geführte flexible und isolierte Kabel. Den Kabeln sind Außenhüllen zugeordnet, die durch angepasste Durchführungsöffnungen in den Stützhaltern hindurchgreifen und darin festgelegt sind.

Der Erfindung liegt die Aufgabe zugrunde, eine verbesserte Vorrichtung zur Führung eines Versorgungskabels bei einem Wagenübergangssystem derart anzugeben, dass eine insbesondere punktuelle, mechanische Belastung des Versorgungskabels verhindert oder zumindest verringert ist. Zudem soll ein für eine solche Vorrichtung geeignetes Klemmteil angegeben werden.

Die Aufgabe wird erfindungsgemäß gelöst durch eine Vorrichtung mit den Merkmalen des Anspruchs 1. Vorteilhafte Ausgestaltungen, Weiterbildungen und Varianten sind Gegenstand der Unteransprüche.

Das Wagenübergangssystem ist zur Führung wenigstens eines Versorgungskabels ausgelegt, beispielsweise zwischen zwei Wagen eines Zuges. Das Wagenübergangssystem umfasst ein Klemmteil, das zumindest eine Durchführung für das Versorgungskabel aufweist. Die Durchführung erstreckt sich entlang einer Längsachse und zwischen einer Einlauföffnung und einer Auslauföffnung. Weiterhin weist die Durchführung ein Längsschnittprofil auf, mit einer inneren und einer äußeren Längsschnittkontur, wobei zumindest eine der Längsschnittkonturen zumindest abschnittsweise gekrümmt ist.

Die mit der Erfindung erzielten Vorteile bestehen insbesondere darin, dass im Betrieb oder bei einer Bewegung des Versorgungskabels eine punktuelle mechanische Belastung vermieden oder zumindest verringert wird. Insbesondere durch die zumindest abschnittsweise gekrümmte Längsschnittkontur der Durchführung ist eine hierzu geeignete Biegebewegung des Versorgungskabels ermöglicht, bei gleichzeitiger Fixierung desselben im Klemmteil. Bei Bewegung des Versorgungskabels insbesondere senkrecht zur Längsachse ist durch die gekrümmte Längsschnittkontur die Kontaktfläche des Versorgungskabels mit dem Klemmteil vorteilhaft vergrößert, so dass eine entsprechende mechanische Belastung auf eine größere Fläche verteilt wird. Dadurch verringert sich insbesondere auch die Anpresskraft pro Fläche bezüglich des Versorgungskabels, wodurch wiederum der Abrieb an diesem, insbesondere an dessen Mantel verringert wird.

In der DE 196 14 427 dient die Kabelklemme gleichzeitig zur elektrischen Kontaktierung der Versorgungskabel. Dagegen besteht ein wesentlicher Vorteil der vorliegenden Erfindung gerade darin, dass elektrischer und mechanischer Anschluss entkoppelt und räumlich voneinander getrennt sind. Das Klemmteil dient ausschließlich der mechanischen Halterung des Versorgungskabels, ein elektrischer Anschluss erfolgt an einem separaten Anschlusspunkt und nicht am Klemmteil. Dadurch ist es insbesondere möglich, im Falle mehrerer Versorgungskabel diese an unterschiedlichen Anschlusspunkten anzuschließen, jedoch gemeinsam mittels des Klemmteils besonders bauraumsparend zu haltern.

Aufgrund der räumlichen Trennung von Haltepunkt und Anschlusspunkt des Versorgungskabels ist es zudem möglich, die jeweiligen Teile und Materialien des Wagenübergangssystems zweckmäßig je nach Anforderung auszuwählen, d.h. besonders das Klemmteil optimal hinsichtlich dessen Aufgabe, nämlich der mechanischen Halterung des Versorgungskabels, auszulegen. Elektrische Eigenschaften spielen hierbei nämlich vorteilhaft keine Rolle. Das Klemmteil ist dann vorzugsweise aus einem insbesondere mechanisch robusten Kunststoff gefertigt, beispielsweise als kostengünstiges Spritzgussteil. Dieser braucht entsprechend keine besonderen elektrischen Anforderungen zu erfüllen, da das Klemmteil nicht elektrisch mit dem Versorgungskabel verbunden ist. Vielmehr weist das Versorgungskabel einen Kabelmantel aus einem isolierenden Material auf, welches innerhalb der Durchführung mit dem Klemmteil in Kontakt kommt. Zweckmäßigerweise ist das Material des Klemmteils dann unter Berücksichtigung des Materials des Kabelmantels ausgewählt, um beispielsweise eine besonders gute oder konkret definierte Haftreibung zu gewährleisten.

Das Versorgungskabel ist insbesondere ein Kabel zur Leistungsübertragung und entsprechend als Hochspannungskabel oder Starkstromkabel ausgelegt. Insbesondere ist das Versorgungskabel als Spiralkabel oder Dachspirale ausgebildet, das sich helix- oder wendelförmig um eine Kabellängsachse erstreckt, das heißt in Windungen um die Kabellängsachse herum verläuft. In einer Variante ist das Versorgungskabel jedoch nicht helixartig geformt, sondern beispielsweise gerade oder gebogen ausgebildet. Das Versorgungskabel ist mit einem Ende an einem geeigneten elektrischen Anschluss angeschlossen, beispielsweise mittels eines am Ende des Versorgungskabels befestigten Kabelschuhs, und läuft zunächst in die Einlauföffnung ein, durchläuft die Durchführung und tritt über die Auslassöffnung wieder aus dem Klemmteil aus. Die Einlauf- und die Auslauföffnung werden allgemein jeweils auch als Öffnung bezeichnet.

Die Durchführung umfasst eine Innenwand, deren Verlauf in Richtung der Längsachse in besonderer Weise angepasst ist, so dass eine verbesserte Führung und Halterung des Versorgungskabels erzielt wird. Im Längsschnitt, das heißt in einer Längsschnittebene parallel zur Längsachse der Durchführung, ergibt sich auf diese Weise ein Längsschnittprofil, das durch zwei Längsschnittkonturen charakterisiert ist. Dabei verläuft die Längsachse insbesondere zumindest teilweise gekrümmt in der Längsschnittebene und stellt insbesondere eine Mittenlinie der beiden Längsschnittkonturen dar. Die Längsschnittebene ist dann insbesondere eine Symmetrieebene derart, dass die Durchführung spiegelsymmetrisch bezüglich dieser Längsschnittebene ist.

Im Längsschnitt beranden die Längsschnittkonturen den Innenraum der Durchführung. Dabei sind die Längsschnittkonturen nicht notwendigerweise gleichartig ausgebildet, das heißt weisen nicht notwendigerweise den gleichen Verlauf auf. Zudem ist die Durchführung insbesondere derart in das Klemmteil eingebracht, dass jene bezüglich eines Mittelpunktes des Klemmteils versetzt angeordnet ist. Die bezüglich dieses Mittelpunkts näher verlaufende Längsschnittkontur ist dann eine innere Längsschnittkontur, die weiter außen liegende Längsschnittkontur entsprechend eine äußere Längsschnittkontur.

Der Innenraum der Durchführung ist bis auf die Einlauföffnung und die Auslauföffnung vom Klemmteil insbesondere vollständig umschlossen. Mit anderen Worten: die Durchführung ist rohr- oder schlauchförmig im Klemmteil ausgebildet und weist eine durchgehende Wandung auf. Das Versorgungskabel ist somit vollumfänglich vom Klemmteil umschlossen und somit in allen Richtungen quer zur Längsrichtung gleichermaßen optimal gehaltert.

Zumindest eine der beiden Längsschnittkonturen des Längsschnittprofils ist wenigstens abschnittsweise gekrümmt ausgeführt, das heißt diese verläuft in der Längsschnittebene zumindest abschnittsweise gebogen. Dadurch ist es zum Einen möglich, ein Spiralkabel besonders geeignet durch die Durchführung zu führen. Alternativ oder zusätzlich ist es zum Anderen möglich, einen geeigneten Bewegungsraum für das Versorgungskabel im Betrieb bereitzustellen. Um insbesondere eine punktuelle mechanische Belastung des Versorgungskabels in der Durchführung zu vermeiden, ist die zumindest eine Längsschnittkontur, insbesondere sind beide Längsschnittkonturen vollständig kantenfrei ausgeführt. Dabei wird unter kantenfrei hier und im Folgenden insbesondere verstanden, dass ein gekrümmter Abschnitt einen Krümmungsradius von wenigstens 1 mm aufweist, vorzugsweise 2 mm. Die Längsschnittkontur weist möglicherweise auch gerade Abschnitte auf, wobei der Übergang von einem geraden zu einem gekrümmten Abschnitt ebenfalls abgerundet ausgeführt ist. Vorzugsweise wird bei der Ausbildung des Klemmteils generell auf Kanten in denjenigen Bereichen verzichtet, mit denen das Versorgungskabel möglicherweise in Berührung kommt.

Um insbesondere eine punktuelle Belastung des Versorgungskabels an den Öffnungen zu vermeiden, weisen diese vorzugsweise jeweils abgerundete Kanten auf. Die abgerundeten Kanten sind dabei insbesondere nicht Teil der Längsschnittkonturen. Ein geeigneter Krümmungsradius für die abgerundeten Kanten beträgt wenigstens 1 mm und höchstens 50 mm, vorzugsweise höchstens 10 mm. Bevorzugterweise beträgt der Krümmungsradius etwa 2 mm.

Vorzugsweise sind für das wenigstens eine Versorgungskabel zwei Durchführungen mit unterschiedlichen Längsschnittprofilen ausgebildet, nämlich eine erste und eine zweite Durchführung. Auf diese Weise ist die Haltewirkung des Klemmteils weiter verbessert. Aufgrund der unterschiedlichen Ausführung der ersten und der zweiten Durchführung ist zudem eine besonders geeignete Verteilung einer möglichen mechanischen Belastung auf verschiedene Abschnitte des Versorgungskabels realisiert sowie auch auf unterschiedliche Bereiche des Klemmteils. Die beiden Durchführungen werden von dem Versorgungskabel dann nacheinander durchlaufen, wobei dieses jeweils von dessen Ende aus gesehen zunächst über die jeweilige Einlauföffnung in die jeweilige Durchführung ein und über die zugehörige Auslauföffnung wieder austritt.

Die zumindest eine Längsschnittkontur weist wenigstens abschnittsweise einen Krümmungsradius auf, der einem Krümmungsradius des Versorgungskabels entspricht. Mit anderen Worten: der Krümmungsradius der Längsschnittkontur ist abschnittsweise an den Krümmungsradius des Versorgungskabels angepasst. Aufgrund der Stärke, das heißt eines bestimmten Durchmessers des Versorgungskabels weist dieses insbesondere einen inneren und einen äußeren Krümmungsradius auf. Im Falle der inneren Längsschnittkontur entspricht deren Krümmungsradius dann abschnittsweise dem inneren Krümmungsradius, bei der äußeren Längsschnittkontur entsprechend dem äußeren Krümmungsradius. Dadurch ist eine besonders geeignet, das heißt hier insbesondere passend geformte Durchführung zur Führung eines Spiralkabels, allgemein eines gebogenen Versorgungskabels ausgebildet.

Unter Krümmungsradius des Versorgungskabels wird dabei insbesondere derjenige Krümmungsradius verstanden, den das Versorgungskabel im mechanisch unbelasteten Zustand aufweist, das heißt zu einem Zeitpunkt, an dem das Versorgungskabel keine mechanische Krafteinwirkung erfährt und insbesondere die bei dessen Fertigung ausgebildete Krümmung aufweist. Die Längsschnittkontur ist im Falle einer gekrümmten inneren Längsschnittkontur dann konvex ausgebildet, liegt also an der Innenseite einer Windung des Versorgungskabels an, das heißt an der der Kabellängsachse zugewandten Seite; im Falle einer gekrümmten äußeren Längsschnittkontur ist diese entsprechend konvex und liegt an der Außenseite der Windung an.

Alternativ oder zusätzlich weist die zumindest eine Längsschnittkontur in einer geeigneten Variante wenigstens abschnittsweise einen Krümmungsradius auf, der einem vorgegebenen, minimalen Krümmungsradius des Versorgungskabels entspricht oder einen Verlauf des Versorgungskabels mit dem minimalen Krümmungsradius ermöglicht. Auf diese Weise wird für das Versorgungskabel ein besonders geeigneter Bewegungsfreiraum bereitgestellt. Dabei entspricht der minimale Krümmungsradius einem entsprechend der Auslegung des Versorgungskabels vorgegebenen Minimalkrümmungsradius. Bei einer entsprechenden Bewegung des Versorgungskabels im Betrieb ist dann durch die Längsschnittkontur sichergestellt, dass zum Einen der minimale Krümmungsradius zumindest in der Durchführung gehalten wird sowie zum Anderen, dass in diesem Fall das Versorgungskabel optimal an der Innenwand der Durchführung anliegt und eine entsprechende Krafteinwirkung großflächig verteilt ist.

Um eine Krümmung des Versorgungskabels auf den minimalen Krümmungsradius zu ermöglichen, ist der Krümmungsradius in einer Ausführungsform auf dem entsprechenden Abschnitt der Längsschnittkontur im Vergleich zum Krümmungsradius des Versorgungskabels in mechanisch unbelastetem Zustand verringert. Eine vergleichbare Wirkung ist jedoch auch mit einem größeren Krümmungsradius der Längsschnittkontur erzielbar, indem dieser in einer alternativen Ausführungsform von einem Mittelpunkt ausgeht, der gegenüber einem Mittelpunkt des Krümmungsradius des Versorgungskabels versetzt ist, insbesondere in radialer Richtung bezüglich der Kabellängsachse. Dabei ist es insbesondere möglich, dass die Längsschnittkontur den gleichen Krümmungsradius wie das unbelastete Versorgungskabel aufweist, jedoch aufgrund des Versatzes ein geeigneter Freiraum in der Durchführung ausgebildet ist, der eine stärkere Krümmung, das heißt eine Verringerung des Krümmungsradius des Versorgungskabels bei einer Belastung im Betrieb ermöglicht.

In einer vorteilhaften Ausgestaltung sind beide Längsschnittkonturen auf einem ersten Abschnitt in gleicher Richtung gekrümmt und auf einem zweiten Abschnitt in entgegengesetzter Richtung. Eine auf diese Weise ausgeformte Durchführung ist besonders für ein innerhalb derselben gekrümmt verlaufendes Versorgungskabel, beispielsweise ein Spiralkabel geeignet. Im ersten Abschnitt wird das Versorgungskabel dann insbesondere gehaltert, während im zweiten Abschnitt aufgrund der entgegengesetzten Krümmung ein erweiterter Bewegungsfreiraum für das Versorgungskabel geschaffen ist. Mit anderen Worten: eine der Längsschnittkonturen ist S-förmig ausgebildet, die andere in etwa C-förmig, wodurch einerseits der erste Abschnitt mit gleichartig verlaufenden Längsschnittkonturen ausgebildet ist und der zweite Abschnitt mit auseinanderlaufenden Längsschnittkonturen. Insbesondere im Falle eines Spiralkabels ist zweckmäßigerweise die innere Längsschnittkontur C-förmig ausgebildet und die äußere Längsschnittkontur S-förmig.

Zur Fixierung des Versorgungskabels in der Durchführung, weist diese vorteilhafterweise einen Halteabschnitt auf und auf dem Halteabschnitt einen Durchmesser, der im Wesentlichen dem Durchmesser des Versorgungskabels entspricht. Mit anderen Worten: die lichte Weite der Durchführung entlang des Halteabschnitts ist an das Außenmaß des Versorgungskabels angepasst. Unter im Wesentlichen wird insbesondere verstanden, dass der Durchmesser des Halteabschnitts höchstens dem Durchmesser des Versorgungskabels entspricht, das heißt wenigstens formschlüssig ist, sowie höchsten 10% geringer ist als der Durchmesser des Versorgungskabels. Bevorzugt ist der Durchmesser des Halteabschnitts zwischen 5% und 8% geringer als der Durchmesser des Versorgungskabels. Dadurch wird eine geeignete Klemmwirkung derart erzeugt, dass das Versorgungskabel aufgrund von Reibung an der Innenwand in der Durchführung fixiert ist, jedoch nicht gequetscht ist, so dass ein Verrutschen oder Schlupfen des im Mantel des Versorgungskabels geführten Leiters ermöglicht ist. Beispielsweise weist das Versorgungskabel einen Durchmesser von etwa 21,5 mm auf und der Halteabschnitt einen Durchmesser von etwa 20,4 mm. Der Halteabschnitt entspricht insbesondere dem oben erwähnten ersten Abschnitt.

In einer bevorzugten Ausgestaltung ist der Halteabschnitt nach Art eines gebogenen Zylinders ausgebildet. Durch die zylinderförmige Ausführung wird das Versorgungskabel vorteilhaft formschlüssig im Halteabschnitt gehalten und dabei nicht gequetscht. Letzteres ist insbesondere häufig bei bisher bekannten Klemmteilen der Fall, die aus zwei mittels Schrauben gegeneinander verpressten Halbschalen aufgebaut sind, in denen das Versorgungskabel dann eingequetscht wird. In diesem Fall ist dann zudem eine definierte Verschraubung der Halbschalen derart möglich, dass keine zur Fixierung des Versorgungskabels benötigte Klemmkraft erzeugt werden muss, die möglicherweise zu Verschleiß am Klemmteil führt, sondern es muss lediglich eine Verbindung der Halbschalen miteinander erzielt werden. Aufgrund der definierten Verschraubung wird insbesondere zwischen den beiden Halbschalen auch die Ausbildung eines Spaltes vermieden, der ansonsten möglicherweise eine unerwünschte Seitwärtsbewegung des Versorgungskabels ermöglicht. Das heißt, die Halbschalen liegen aneinander an und lediglich die Durchführung bildet einen Hohlraum zwischen den Halbschalen aus. Die Halbschalen sind somit vorteilhaft spaltfrei miteinander verbunden.

Durch die Auslegung der Durchführung auf den Durchmesser des Versorgungskabels, wird dieses lediglich durch einen Formschluss gehalten; bei mechanischer Belastung des Kabels, insbesondere beim Verbiegen tritt dann eine fixierende Reibwirkung auf. Dies hat insbesondere den Vorteil, dass der Leiter oder die Litze im Versorgungskabel relativ zum Mantel beweglich bleiben. Zudem verteilt sich eine mögliche Torsion im gesamten Kabel, also auch in demjenigen Abschnitt des Versorgungskabels, der im Klemmteil einsitzt. Mit anderen Worten: die entsprechende mechanische Belastung wird vorteilhaft über das gesamte Versorgungskabel verteilt.

In einer zweckmäßigen Weiterbildung erstreckt sich der Halteabschnitt wenigstens über ein Viertel der Länge der Durchführung und höchstens über die Hälfte, bevorzugt etwa über ein Drittel. Dabei wird unter Länge der Durchführung insbesondere die Länge der Längsachse zwischen der Einlauf- und der Auslauföffnung verstanden. Die entsprechend gewählte Länge ermöglicht eine besonders geeignete Halterung des Versorgungskabels in der Durchführung, bei gleichzeitiger Möglichkeit zur Bereitstellung eines Bewegungsfreiraums auf der verbleibenden Länge der Durchführung.

Alternativ oder zusätzlich zum Halteabschnitt schließt sich zweckmäßigerweise an die Auslassöffnung ein Auslaufabschnitt an, der nach Art eines Trichters ausgebildet ist. Dazu weist die Durchführung auf dem Auslaufabschnitt einen Durchmesser auf, der sich in Richtung der Auslassöffnung vergrößert. Auf diese Weise wird für das Versorgungskabel im Betrieb ein besonders geeigneter Bewegungsfreiraum geschaffen. Dieser ist insbesondere durch die durch den Trichter gebildete Innenwand begrenzt. Die Begrenzung erfolgt dabei vorzugsweise derart, dass der Krümmungsradius der Längsschnittkonturen dem minimalen Krümmungsradius des Versorgungskabels entspricht. Der Auslaufabschnitt entspricht insbesondere dem oben erwähnten zweiten Abschnitt.

In einer zweckmäßigen Weiterbildung weist die Durchführung auf dem Auslaufabschnitt durchgängig einen kreisförmigen Querschnitt auf, wobei der Querschnitt quer, das heißt insbesondere senkrecht zur Längsachse der Durchführung verläuft. Mit anderen Worten: der Auslaufabschnitt ist rotationssymmetrisch zur Längsachse ausgebildet. Auf diese Weise ist in allen Richtungen senkrecht zur Längsachse ein geeigneter Biegefreiraum geschaffen. Der Durchmesser entspricht insbesondere dem Abstand zwischen den beiden Längskonturen auf dem Auslaufabschnitt.

Insbesondere bei der Halterung eines Spiralkabels mittels zweier Durchführungen ist die erste Durchführung vollständig als gebogener Zylinder ausgeführt, der sich zwischen den beiden entsprechenden Öffnungen erstreckt. Insbesondere ist die erste Durchführung vollständig als Halteabschnitt ausgebildet. Die zweite Durchführung ist dagegen vorzugsweise als Kombination eines Trichters und eines gebogenen Zylinders ausgeführt, wobei der Zylinder dann insbesondere einen Halteabschnitt bildet und die Durchführung insgesamt eine Trompetenform aufweist. Die Längsschnittkonturen der ersten Durchführung sind dann jeweils C-förmig und in gleicher Richtung gekrümmt. Vom Anschluss ausgehend durchläuft das Versorgungskabel dann zunächst, die zylinderförmige, erste Durchführung und anschließend die trompetenförmige, zweite Durchführung. Durch diese Ausgestaltung erfolgt in der ersten Durchführung hauptsächlich eine Fixierung des Versorgungskabels, während in der zweiten Durchführung eine Halterung nur abschnittsweise erfolgt und ansonsten durch den trichterförmigen Auslaufabschnitt ein kontrollierter Bewegungsfreiraum für das Versorgungskabel bereitgestellt ist.

Die Aufgabe wird weiterhin gelöst durch ein Wagenübergangssystem mit den Merkmalen des Anspruchs 11. Vorteilhafte Ausgestaltungen, Weiterbildungen und Varianten sind Gegenstand der Unteransprüche. Besonders vorteilhafte Ausgestaltungen der Vorrichtung ergeben sich insbesondere in Kombination mit den bereits oben genannten Varianten.

Das Wagenübergangssystem ist daher insbesondere entsprechend einer der oben genannten Ausgestaltungen ausgebildet und umfasst ein Klemmteil, das zumindest eine Durchführung für das Versorgungskabels aufweist. Dabei ist das Versorgungskabel hier gewunden, insbesondere helixförmig und verläuft in einer Kabellängsrichtung. Unter gewunden wird insbesondere verstanden, dass das Versorgungskabel zumindest eine Windung aufweist, die am Klemmteil vorbeigeführt wird. Das Klemmteil weist zudem eine in Kabellängsrichtung weisende Außenfläche auf, auch als Stirnfläche bezeichnet, mit zumindest einer Anlagefläche für das Versorgungskabel, welche geneigt zur Kabellängsrichtung verläuft, das heißt bezüglich der Kabellängsrichtung angestellt ist. Besonders bei helixförmigen oder allgemein gewundenen Versorgungskabeln ist es möglich, dass im Betrieb ein Abschnitt des Versorgungskabels auf das Klemmteil gedrückt wird. Insbesondere bei quaderförmig ausgeführten Klemmteilen kommt dann das Versorgungskabel mit einer Kante, insbesondere Außenkante derart in Berührung, dass eine nachteilige punktuelle Belastung auf das Versorgungskabel ausgeübt wird. Durch die Anlagefläche ist nun die Außenfläche insgesamt derart ausgebildet, dass diese für das möglicherweise daran angedrückte Versorgungskabel im Bereich der Anlagefläche eine Auflage- oder Kontaktfläche bereitstellt, anstelle einer Kante. Mögliche andere Kanten, welche die Anlagefläche beranden, sind zweckmäßigerweise abgerundet ausführt. Dabei wird eine solche Kante, die zugleich auch die Außenfläche berandet als äußere Kante bezeichnet und eine Kante, die auf der Außenfläche verläuft und insbesondere den Übergang zu einer Anlagefläche darstellt als innere Kante. Vorzugsweise sind die Kanten mit einem Krümmungsradius von wenigstens 1 mm und höchstens 50 mm, wobei insbesondere die äußere Kante ähnlich den oben beschriebenen Kanten der Öffnungen ausgeführt ist und zweckmäßigerweise einen geringeren Krümmungsradius aufweist, als die innere Kante.

Zur Ausbildung einer besonders geeigneten Anlagefläche ist diese vorzugsweise in einem vorgegebenen Winkel geneigt oder angestellt, der in etwa der Steigung der Windung des Versorgungskabels entspricht. Um insbesondere im Falle eines Versorgungskabels zur Leistungsübertragung eine geeignete Anlagefläche bereitzustellen ist die Anlagefläche bezüglich der Kabellängsrichtung im Winkel von wenigstens 65° und höchstens 85° geneigt.

Weiterhin weist das Klemmteil eine Höhe auf, insbesondere in Richtung der Längsachse der Durchführung und senkrecht zur Kabellängsrichtung. In einer zweckmäßigen Ausgestaltung erstreckt sich die Anlagefläche über zumindest 15% der Höhe und höchstens über 50%. Auf diese Weise ist eine geeignet große Anlagefläche bereitgestellt.

Vorzugsweise weist die Außenfläche zwei in entgegengesetzten Richtungen angestellte Anlageflächen auf. Auf diese Weise ist es dann insbesondere möglich, einer Windung des Versorgungskabels auf beiden Seiten der Außenfläche einer Anlagefläche zu bieten. Die Ausführung mit zwei Anlageflächen ist zudem auch bei einer Führung mehrerer Versorgungskabel dahingehend vorteilhaft, dass zwei verschiedene Versorgungskabel möglicherweise auf unterschiedlichen Seiten des Klemmteils austreten und in diesem Fall potentiell beidseitig eine punktuelle Belastung durch Kanten auftritt. Durch die Ausführung mit zwei Anlageflächen wird dies jedoch vorteilhaft vermieden.

Die Aufgabe wird weiterhin gelöst durch ein Klemmteil mit den Merkmalen des Anspruchs 15. Die im Zusammenhang mit dem Wagenübergangssystem genannten Weiterbildungen und Vorteile gelten sinngemäß auch für das Klemmteil.

Dieses Klemmteil wird bevorzugt im Eisenbahnbereich eingesetzt. Grundsätzlich kann es generell auch bei der Führung eines Versorgungskabels zwischen zwei relativ zueinander beweglichen Einheiten eingesetzt werden, beispielsweise bei Robotersystemen oder sonstigen Fertigungsmaschinen, bei denen zwei zueinander bewegliche Teile mittels eines Versorgungskabels miteinander verbunden sind.

Nachfolgend werden Ausführungsbeispiele der Erfindung anhand einer Zeichnung näher erläutert. Darin zeigen:
- Fig. 1: ein Wagenübergangssystem,
- Fig. 2: ein Tragteil mit daran befestigtem Klemmteil,
- Fig. 3: die Anordnung gemäß Fig. 2 mit lediglich einer Halbschale des Klemmteils,
- Fig. 4A, 4B: die in Fig. 3 gezeigte Halbschale in Längsschnittansicht,
- Fig. 5: eine alternative Halbschale in Längsschnittansicht,
- Fig. 6: eine weitere alternative Halbschale in Längsschnittansicht,
- Fig. 7: ein alternatives Klemmteil in Schrägansicht, und
- Fig. 8: das Klemmteils gemäß Fig. 7 in einer Seitenansicht mit darin gehaltertem Versorgungskabel.

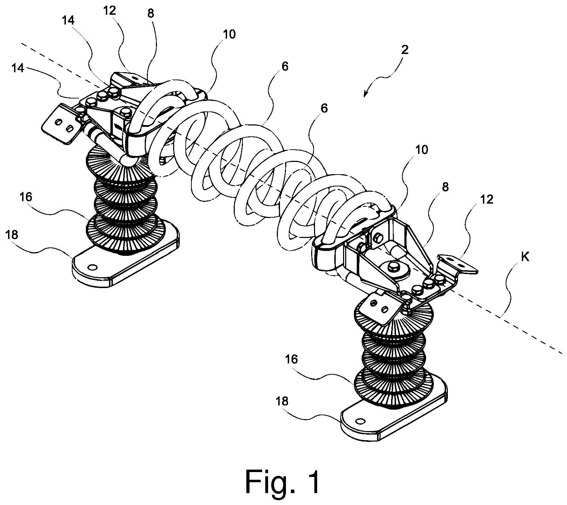

Die Fig. 1 zeigt in einer Schrägansicht ein Ausführungsbeispiel für ein Wagenübergangssystem 2 zur Führung zumindest eines Versorgungskabels 6, hier insbesondere von zwei Versorgungskabeln 6. In der gezeigten Variante umfasst das Wagenübergangssystem 2 zwei Tragteile 8 an denen jeweils ein Klemmteil 10 befestigt ist. Die Klemmteile 10 dienen insbesondere der Halterung der Versorgungskabel 6 und sind hier mittels einer Schraubverbindung am jeweiligen Tragteil 8 festgeschraubt. Die Klemmteile 10 sind hier aus Metall gefertigt, die Tragteile 8 aus Blech. An jedem der Tragteile 8 ist zudem eine elektrische Anschlussschiene 12 befestigt mit der die Enden der Versorgungskabel 6 jeweils an Anschlusspunkten 14 elektrisch leitend verbunden sind. Um die Tragteile 8 jeweils mit einem hier nicht näher dargestellten Wagen eines Zuges mechanisch zu verbinden, ist jedes der Tragteile 8 jeweils auf einem Isolator 16 angebracht, welcher wiederum über eine jeweilige Bodenplatte 18 am Wagen befestigbar ist.

Die in der Fig. 1 gezeigten Versorgungskabel 6 sind als Spiralkabel ausgebildet, auch als Dachspiralen bezeichnet, und erstrecken sich hier helixartig um eine gemeinsame Kabellängsachse K herum. Dabei verlaufen die Versorgungskabel 6 hier konzentrisch zueinander, das heißt das eine Versorgungskabel 6 ist innerhalb des anderen Versorgungskabels 6 angeordnet; zudem verlaufen die Versorgungskabel 6 mit zueinander entgegengesetztem Drehsinn.

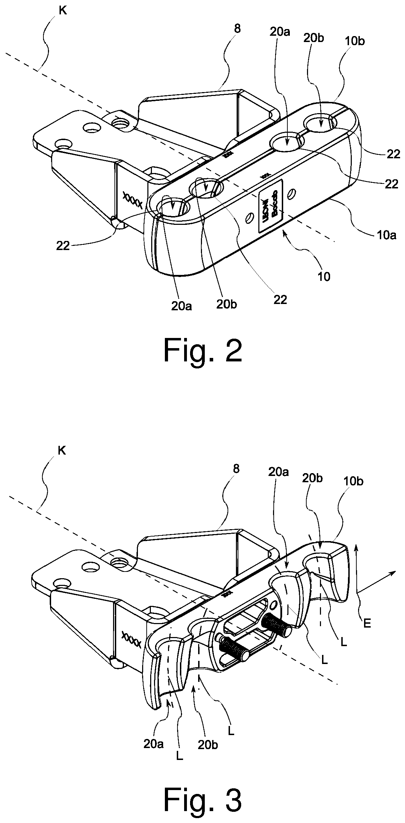

In Fig. 2 ist ein Teil des Wagenübergangssystems 2 aus Fig. 1 dargestellt, nämlich eines der Tragteile 8 mit daran befestigtem Klemmteil 10. Letzteres ist insbesondere aus zwei Halbschalen 10a, 10b zusammengesetzt. Dabei wird die vom Tragteil 8 wegweisende Halbschale 10a auch als vordere Halbschale 10a bezeichnet und die mit dem Tragteil 8 direkt in Kontakt stehende Halbschale 10b als hintere Halbschale 10b.

Das Tragteil 8 dient in Fig. 2 insbesondere auch als Winkel derart, dass die Montagerichtungen des Klemmteils 10 und des hier nicht gezeigten Isolators 16 in einem vorgegebenen Winkel, hier 90° zueinander stehen.

In dem hier gezeigten Ausführungsbeispiel sind in das Klemmteil 10 für jedes der beiden Versorgungskabel 6 jeweils zwei Durchführungen 20a, 20b eingebracht. Insbesondere dient dabei das bezüglich der Kabellängsachse K innenliegende Durchführungspaar 20a, 20b der Halterung des innenliegenden Versorgungskabels 6 und das außenliegende Durchführungspaar 20a, 20b der Halterung des außenliegenden Versorgungskabels 6. Die Durchführungen 20a, 20b sind dabei über Öffnungen 22 zugänglich, die entsprechend auf der Oberseite und der hier nicht sichtbaren Unterseite des Klemmteils 10 ausgebildet sind. Um eine punktuelle Belastung der Versorgungskabel 6 beim Bewegen dieser zu verringern sind die Öffnungen 22 hier jeweils mit abgerundeten Kanten ausgeführt; der Krümmungsradius beträgt hier etwa 2 mm.

In Fig. 3 ist die in der Fig. 2 dargestellte Anordnung ohne die vordere Halbschale 10a dargestellt. Deutlich erkennbar sind hier die Durchführungen 20a, 20b und deren Innenwände. Die aufgrund der Ausbildung als Halbschalen 10a, 10b gebildete Trennebene stellt zugleich eine Längsschnittebene E der Durchführungen 20a, 20b dar. In Fig. 3 ist diese Längsschnittebene E durch ein Pfeilpaar verdeutlicht. Die Durchführungen 20a, 20b erstrecken sich entlang zumindest abschnittsweise gekrümmter Längsachsen L die jeweils in der Längsschnittebene E verlaufen. Dementsprechend folgen die Durchführung 20a, 20b generell einem gebogenen oder gekrümmten Verlauf. Die Längsschnittebene E ist weiterhin insbesondere dadurch charakterisiert, dass jede der Durchführungen 20a, 20b spiegelsymmetrisch zu dieser ist. Die nicht dargestellte vordere Halbschale 10a umfasst folglich entsprechend spiegelbildlichen Ausnahmen zur Ausbildung der Durchführungen 20a, 20b.

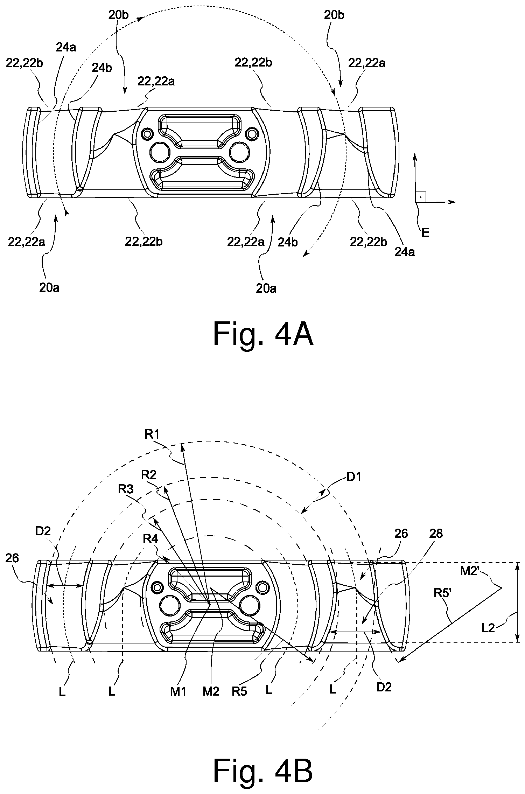

Die Fig. 4A und 4B zeigen jeweils das Klemmteil 10b in einer Vorderansicht, das heißt das Klemmteil 10 in einer Längsschnittansicht, wobei die Schnittebene der Längsschnittebene E aus der Fig. 3 entspricht. Ebenso sind die Durchführungen 20a, 20b demnach im Längsschnitt gezeigt und weisen jeweils zwei Längsschnittkonturen 24a, 24b auf, die gemeinsam ein Längsschnittprofil bilden. Dabei wird die jeweils bezüglich des Klemmteils 10 innenliegende Längsschnittkontur 24a auch als innere Längsschnittkontur 24a bezeichnet und die jeweils außenliegende Längsschnittkontur 24b einer jeweiligen Durchführung 20a, 20b als äußere Längsschnittkontur 24b.

Der Verlauf des hier nicht gezeigten äußeren Versorgungskabels 6 ist in der Fig. 4A durch eine gestrichelte Linie angedeutet. Vom ebenfalls nicht gezeigten Anschlusspunkt 14 aus durchläuft das Versorgungskabel 6 zunächst die erste Durchführung 20a von unten nach oben und tritt nach einer halben Windung von oben in die zweite Durchführung 20b ein, die es anschließend auf der Unterseite des Klemmteils 10 verlässt. Daher wird die auf der Unterseite des Klemmteils 10 angeordnete Öffnung 22 der ersten Durchführung 20a auch als Einlauföffnung 22a bezeichnet, ebenso die auf der Oberseite des Klemmteils 10 liegende Öffnung 22 der zweiten Durchführung 20b. Analog dazu werden die Öffnungen 22 der Durchführung 20a, 20b, aus denen das Versorgungskabel 6 ausläuft als Auslauföffnungen 22b bezeichnet.

In der Fig. 4B ist der jeweilige Verlauf der Durchführungen 20a, 20b und deren Längsschnittkonturen 24a, 24b verdeutlicht. Die dort links dargestellte erste Durchführung 20a ist nach Art eines gebogenen Zylinders ausgestaltet. Die Längsschnittkonturen 24a, 24b sind dazu in gleicher Richtung gekrümmt und weisen jeweils einen etwa C-förmigen Verlauf auf. Die rechts dargestellte zweite Durchführung 20b ist dagegen nach Art einer Trompete ausgeformt, wobei sich an die Einlauföffnung 22a ein nach Art eines gebogenen Zylinders ausgeformter Halteabschnitt 26 anschließt, auf den wiederum ein trichterförmiger Auslaufabschnitt 28 folgt. Dabei weist die Durchführung 20b eine Länge L2 auf und der Halteabschnitt 26 erstreckt sich in dem hier gezeigten Ausführungsbeispiel von der Einlassöffnung 22a aus über etwa ein Drittel der Länge L2 der Durchführung 20b. Die Durchführung 20a ist dagegen hier vollständig als Halteabschnitt 26 ausgebildet.

Die Längsschnittkonturen 24a, 24b der ersten Durchführung 20a sind jeweils C-förmig geformt und in gleicher Richtung gekrümmt. Damit entspricht die Durchführung 20a einem gebogenen Zylinder. Dabei ist der jeweilige Krümmungsradius R1, R2 der äußeren bzw. inneren Längsschnittkontur 24a, 24b entlang dieser konstant. Desweiteren sind die beiden Krümmungsradien R1, R2 auch Radien konzentrischer Kreise mit einem Mittelpunkt M1, der in der hier gezeigten Variante auch zugleich ein Mittelpunkt M1 des Klemmteils 10 ist. Das Längsschnittprofil der Durchführung 20a ist somit ein Ringabschnitt. Diese Ausgestaltung entspricht insbesondere dem Verlauf des gewundenen Versorgungskabels 6 und dient entsprechend zu dessen Fixierung. Der durch die Radien R1, R2 definierte Ring zeigt daher hier insbesondere auch die Kontur des nicht dargestellten Versorgungskabels 6. Die Radien R1, R2 stellen dann einen äußeren bzw. inneren Krümmungsradius des Versorgungskabels dar. Die Längsachse L der ersten Durchführung 20a ist dann entsprechend mit dem nominellen oder auch mittleren Krümmungsradius des Versorgungskabels 6 gekrümmt.

Auf dem sich an die Einlassöffnung 22a anschließenden Halteabschnitt 26 folgen die Längsschnittkonturen 24a, 24b der zweiten Durchführung zunächst den durch die Krümmungsradien R1, R2 vorgegebenen Kreisen. Der Halteabschnitt 26 ist somit ebenso nach Art eines gebogenen Zylinders ausgebildet. Im weiteren Verlauf der Durchführung 20b geht der Halteabschnitt 26 in den Auslaufabschnitt 28 über, auf dem die beiden Längsschnittkonturen 24a, 24b nun in entgegengesetzter Richtung gekrümmt sind. In dem hier gezeigten Ausführungsbeispiel weisen die Längsschnittkonturen 24a, 24b gleiche Krümmungsradien R5, R5' auf, die in einer hier nicht gezeigten Variante jedoch für die beiden Längsschnittkonturen 24a, 24b unterschiedlich ist. Der Mittelpunkte M2 des durch den Radius R5 definierten Kreises ist nicht gleich dem Mittelpunkt M1 der durch die Radien R1, R2, R3, R4 bestimmten konzentrischen Kreise, sondern versetzt dazu angeordnet. Der entsprechende Mittelpunkt M2' bezüglich des Radius R5' ist spiegelbildlich zum Mittelpunkt M2 bezüglich des geraden Abschnitts der Längsachse L der zweiten Durchführung 20b. Auf diese Weise sind die Längsschnittkonturen 24a, 24b auf dem Auslaufabschnitt 28 bezüglich des Versorgungskabels 6 zurückgesetzt, wodurch ein entsprechender Bewegungsfreiraum in der Durchführung 20b geschaffen ist. Insbesondere ist durch den Radius R2 ein minimaler Krümmungsradius des Versorgungskabels 6 derart vorgegeben, dass dieses beim Anliegen an die Längsschnittkontur 24a der Durchführung 20b den entsprechenden minimalen Krümmungsradius einnimmt. In einer hier nicht gezeigten Alternative wird eine ähnlich Wirkung dadurch erzielt, dass Radius R5 geringer ist, als der Radius R2 und der Mittelpunkt M2 bezüglich des Mittelpunkts M1 in Fig. 4B nicht in vertikaler, sondern lediglich oder zusätzlich in horizontaler Richtung versetzt ist.

Insbesondere aufgrund des Versatzes des Mittelpunktes M2 muss der Radius R2 nicht zwingend einen geringeren Wert aufweisen, als der minimale Krümmungsradius des Versorgungskabels 6. Es genügt hierbei lediglich, dass die Durchführung 20b aufgrund des Verlaufs der beiden Längsschnittkonturen 24a, 24b auf dem Auslaufabschnitt 28 einen Durchmesser D1 aufweist, der sich in Richtung der Auslauföffnung 22b vergrößert und entsprechend größer ist als der Durchmesser D2 des Versorgungskabels 6. Die innere Längsschnittkontur 24a der Durchführung 20b ist damit durchgängig konvex ausgebildet und weist einen etwa C-förmigen Verlauf auf, während die äußere Längsschnittkontur 24b einen etwa S-förmigen Verlauf aufweist.

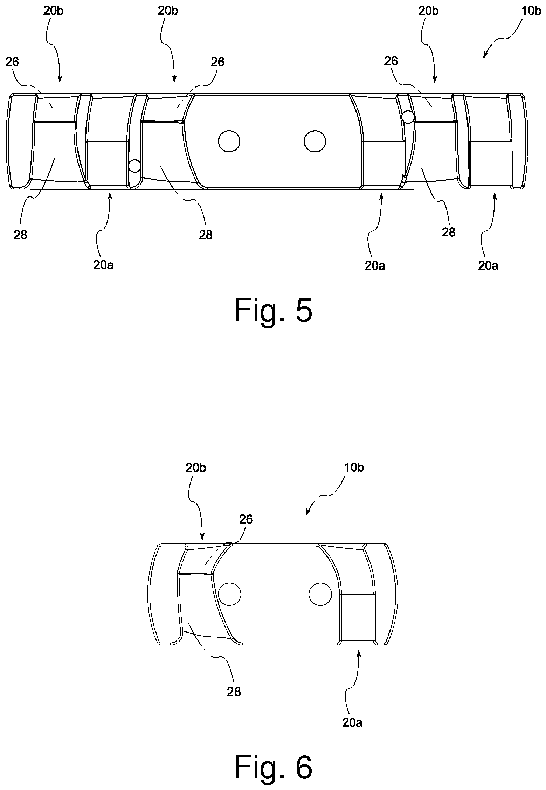

Die Fig. 5 und 6 zeigen jeweils eine alternative Ausführungsform der hinteren Halbschale 10b des Klemmteils 10 in Längsschnittansicht. Die hier jeweils nicht dargestellte vordere Halbschale 10a ist entsprechend komplementär hierzu ausgebildet. Die in der Fig. 5 gezeigte Variante ist zur Halterung von drei Versorgungskabeln 6 ausgelegt. Entsprechend weist das Klemmteil 10 drei Durchführungspaare 20a, 20b auf. Die Fig. 6 zeigt entsprechend eine Variante des Klemmteils 10 zur Führung lediglich eines Versorgungskabels 6 mittels eines einzelnen Durchführungspaars 20a, 20b.

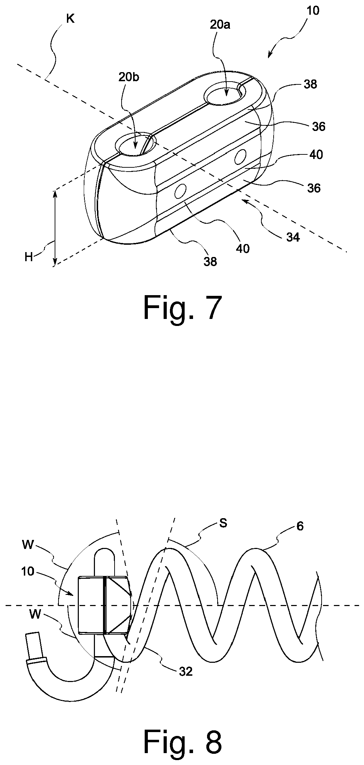

In der Fig. 7 ist in einer Schrägansicht ein Klemmteil 10 dargestellt, zur Halterung eines hier nicht gezeigten Versorgungskabels 6, das insbesondere ein Spiralkabel ist. Die Fig. 8 zeigt das Klemmteil 10 aus Fig. 7 in einer Seitenansicht mit darin gehaltertem Versorgungskabel 6. Zur geeigneten Vorbeiführung einer Windung 32 des Versorgungskabels 6 ist die Außenfläche 34 der vorderen Halbschale 10a des Klemmteils 10 mit zwei Anlageflächen 36 versehen. Wie Fig. 8 deutlich zeigt, sind diese Anlageflächen 36 jeweils in einem Winkel W bezüglich der Kabellängsachse K angestellt. Dieser beträgt in dem hier dargestellten Ausführungsbeispiel etwa 85°. Deutlich erkennbar ist auch, dass die an der vorderen Halbschale 10a vorbeigeführte Windung 32 des Versorgungskabels 6 mit einer Steigung S angestellt ist, die grob dem Winkel W entspricht mit dem die Anlagefläche 36 geneigt ist. Im Falle einer Stauchung des Versorgungskabels 6 entlang der Kabellängsachse K oder möglicherweise auch bei einer Biegung wird insbesondere die Windung 32 in Richtung der Außenfläche 34 gedrückt. In dem hier gezeigten Ausführungsbeispiel bildet dann die untere Anlagefläche 36 eine geeignet große Auflage für das Versorgungskabel 6 und eine punktuelle Belastung wird vermieden. Zusätzlich sind hier auch die Anlageflächen 36 mit abgerundeten Kanten 38, 40 ausgeführt, wobei in der in den Fig. 7 und 8 gezeigten Variante der Krümmungsradius der äußeren Kanten 38, das heißt der oberen und der unteren Kante mit einem Krümmungsradius von etwa 2 mm ausgeführt sind und die inneren Kanten 40 mit einem Krümmungsradius von etwa 50 mm.

### Bezugszeichenliste

- 2: Wagenübergangssystem
- 6: Versorgungskabel
- 8: Tragteil
- 10: Klemmteil
- 10a: vordere Halbschale
- 10b: hintere Halbschale
- 12: Anschlussschiene
- 14: Anschlusspunkt
- 16: Isolator
- 18: Bodenplatte
- 20a: erste Durchführung
- 20b: zweite Durchführung
- 22: Öffnung
- 22a: Einlauföffnung
- 22b: Auslauföffnung
- 24a: äußere Längsschnittkontur
- 24b: innere Längsschnittkontur
- 26: Halteabschnitt
- 28: Auslaufabschnitt
- 32: Windung
- 34: Außenfläche
- 36: Anlagefläche
- 38: äußere Kante
- 40: innere Kante
- K: Kabellängsachse
- L: Längsachse
- L2: Länge
- M1, M2, M2': Mittelpunkt
- R1, R2, R3, R4, R5, R5': Radius

## Patentansprüche

1. Wagenübergangssystem (2) zur Führung wenigstens eines Versorgungskabels (6), mit einem Klemmteil (10), das zumindest eine Durchführung (20a, 20b) für das Versorgungskabel (6) aufweist,
wobei die Durchführung (20a, 20b) sich entlang einer Längsachse (L) und zwischen einer Einlauföffnung (22a) und einer Auslauföffnung (22b) erstreckt sowie ein Längsschnittprofil aufweist, mit einer inneren und einer äußeren Längsschnittkontur (24a, 24b),
wobei zumindest eine der Längsschnittkonturen (24a, 24b) zumindest abschnittsweise gekrümmt ist, und
wobei die zumindest eine Längsschnittkontur (24a, 24b) wenigstens abschnittsweise einen Krümmungsradius (R1, R2) aufweist, der einem Krümmungsradius des Versorgungskabels (6) entspricht.

2. Wagenübergangssystem (2) nach dem vorhergehenden Anspruch,
**dadurch gekennzeichnet,**
**dass** das Versorgungskabel (6) helixförmig ist.

3. Wagenübergangssystem (2) nach einem der vorhergehenden Ansprüche,
**dadurch gekennzeichnet,**
**dass** für das wenigstens eine Versorgungskabel (6) zwei Durchführungen (20a, 20b) mit unterschiedlichen Längsschnittprofilen ausgebildet sind, nämlich eine erste Durchführung (20a) und eine zweite Durchführung (20b).

4. Wagenübergangssystem (2) nach einem der vorhergehenden Ansprüche,
**dadurch gekennzeichnet,**
**dass** die zumindest eine Längsschnittkontur (24a, 24b) wenigstens abschnittsweise einen Krümmungsradius (R5, R5') aufweist, der einem vorgegebenen minimalen Krümmungsradius des Versorgungskabels (6) entspricht oder einen Verlauf des Versorgungskabels (6) mit dem vorgegebenen minimalen Krümmungsradius ermöglicht.

5. Wagenübergangssystem (2) nach einem der vorhergehenden Ansprüche,
**dadurch gekennzeichnet,**
**dass** beide Längsschnittkonturen (24a, 24b) auf einem ersten Abschnitt in gleicher Richtung gekrümmt sind und auf einem zweiten Abschnitt in entgegengesetzter Richtung.

6. Wagenübergangssystem (2) nach einem der vorhergehenden Ansprüche,
**dadurch gekennzeichnet,**
**dass** die Durchführung (20a, 20b) einen Halteabschnitt (26) zur Fixierung des Versorgungskabels (6) aufweist und auf dem Halteabschnitt (26) einen Durchmesser (D2), der im Wesentlichen dem Durchmesser (D1) des Versorgungskabels entspricht.

7. Wagenübergangssystem (2) nach dem vorhergehenden Anspruch,
**dadurch gekennzeichnet,**
**dass** der Halteabschnitt (26) nach Art eines gebogenen Zylinders ausgebildet ist.

8. Wagenübergangssystem (2) nach einem der beiden vorhergehenden Ansprüche,
**dadurch gekennzeichnet,**
**dass** der Halteabschnitt (26) sich wenigstens über ein Viertel der Länge (L2) der Durchführung (20a, 20b) erstreckt und höchstens über die Hälfte.

9. Wagenübergangssystem (2) nach einem der vorhergehenden Ansprüche,
**dadurch gekennzeichnet,**
**dass** sich an die Auslauföffnung (22b) ein Auslaufabschnitt (28) anschließt, der nach Art eines Trichters ausgebildet ist und die Durchführung (20a, 20b) auf dem Auslaufabschnitt (28) dazu einen Durchmesser (D2) aufweist, der sich in Richtung der Auslauföffnung (22b) vergrößert.

10. Wagenübergangssystem (2) nach dem vorhergehenden Anspruch,
**dadurch gekennzeichnet,**
**dass** die Durchführung (20a, 20b) auf dem Auslaufabschnitt (28) durchgängig einen kreisförmigen Querschnitt aufweist.

11. Wagenübergangssystem (2) zur Führung wenigstens eines Versorgungskabels (6), insbesondere nach einem der vorhergehenden Ansprüche, mit einem Klemmteil (10), das zumindest eine Durchführung (20a, 20b) für das Versorgungskabel (6) aufweist,
**dadurch gekennzeichnet,**
**dass** das Versorgungskabel (6) helixförmig in einer Kabellängsrichtung (K) verläuft und das Klemmteil (10) eine in Kabellängsrichtung (K) weisende Außenfläche (34) aufweist, mit zumindest einer Anlagefläche (36) für das Versorgungskabel (6), welche geneigt zur Kabellängsrichtung (K) verläuft.

12. Wagenübergangssystem (2) nach dem vorhergehenden Anspruch,
**dadurch gekennzeichnet,**
**dass** die Anlagefläche (36) bezüglich der Kabellängsrichtung (K) in einem Winkel (W) von wenigstens 65° und höchstens 85° geneigt ist.

13. Wagenübergangssystem (2) nach einem der Ansprüche 11 oder 12,
**dadurch gekennzeichnet,**
**dass** das Klemmteil (10) eine Höhe (H) aufweist und sich die Anlagefläche (36) über zumindest 15% der Höhe (H) erstreckt und höchstens über 50%.

14. Wagenübergangssystem (2) nach einem der Ansprüche 11 oder 13,
**dadurch gekennzeichnet,**
**dass** die Außenfläche (34) zwei in entgegengesetzten Richtungen angestellte Anlageflächen (36) aufweist.

15. Klemmteil für ein Wagenübergangssystem (2) nach zumindest einem der vorhergehenden Ansprüche, das zumindest eine Durchführung (20a, 20b) für das Versorgungskabel (6) aufweist,
**dadurch gekennzeichnet,**
**dass** die Durchführung (20a, 20b) sich entlang einer Längsachse (L) und zwischen einer Einlauföffnung (22a) und einer Auslauföffnung (22b) erstreckt sowie ein Längsschnittprofil aufweist, mit einer inneren und einer äußeren Längsschnittkontur (24a, 24b), wobei zumindest eine der Längsschnittkonturen (24a, 24b) zumindest abschnittsweise gekrümmt ist, oder dass das Versorgungskabel (6) helixförmig in einer Kabellängsrichtung (K) verläuft und das Klemmteil (10) eine in Kabellängsrichtung (K) weisende Außenfläche (34) aufweist, mit zumindest einer Anlagefläche (36) für das Versorgungskabel (6), welche geneigt zur Kabellängsrichtung (K) verläuft.

## Claims

1. Gangway connection system (2) for guiding at least one power cable (6), having a clamping part (10) which comprises at least one feedthrough (20a, 20b) for the power cable (6), wherein the feedthrough (20a, 20b) extends along a longitudinal axis (L) and between an inlet opening (22a) and an outlet opening (22b) and comprises a longitudinal sectional profile, having an inner and an outer longitudinal sectional contour (24a, 24b),
wherein at least one of the longitudinal sectional contours (24a, 24b) is curved at least in regions,
and
wherein the at least one longitudinal sectional contour (24a, 24b) comprises, at least in portions, a radius of curvature (R1, R2) which corresponds to a radius of curvature of the power cable (6).

2. Gangway connection system (2) according to the preceding claim, **characterized in that** the power cable (6) is helical.

3. Gangway connection system (2) according to either of the preceding claims, **characterized in that** two feedthroughs (20a, 20b) with different longitudinal sectional profiles, namely a first feedthrough (20a) and a second feedthrough (20b), are realized for the at least one power cable (6).

4. Gangway connection system (2) according to one of the preceding claims, **characterized in that** the at least one longitudinal sectional contour (24a, 24b) comprises, at least in portions, a radius of curvature (R5, R5') which corresponds to a predefined minimum radius of curvature of the power cable (6) or enables a progression of the power cable (6) at the predefined minimum radius of curvature.

5. Gangway connection system (2) according to one of the preceding claims, **characterized in that** both longitudinal sectional contours (24a, 24b) are curved in the same direction on a first portion and in opposite directions on a second portion.

6. Gangway connection system (2) according to one of the preceding claims, **characterized in that** the feedthrough (20a, 20b) comprises a holding portion (26) for fixing the power cable (6) and a diameter (D2), which corresponds substantially to the diameter (D1) of the power cable, on the holding portion (26).

7. Gangway connection system (2) according to the preceding claim, **characterized in that** the holding portion (26) is realized in the manner of a curved cylinder.

8. Gangway connection system (2) according to either of the two preceding claims, **characterized in that** the holding portion (26) extends over at least a quarter of the length (L2) of the feedthrough (20a, 20b) and no more than over half said length.

9. Gangway connection system (2) according to one of the preceding claims, **characterized in that** an outlet portion (28), which is realized in the manner of a funnel, connects to the outlet opening (22b) and, on the outlet portion (28) in relation thereto, the feedthrough (20a, 20b) comprises a diameter (D2), which increases in the direction of the outlet opening (22b).

10. Gangway connection system (2) according to the preceding claim, **characterized in that** the feedthrough (20a, 20b) comprises a circular cross section consistently on the outlet portion (28) .

11. Gangway connection system (2) for guiding at least one power cable (6), in particular according to one of the preceding claims, having a clamping part (10) which comprises at least one feedthrough (20a, 20b) for the power cable (6), **characterized in that**
the power cable (6) extends in a helical manner in a cable longitudinal direction (K) and the clamping part (10) comprises an outer surface (34) which points in the cable longitudinal direction (K), having at least one abutment surface (36) for the power cable (6) which extends at an angle with respect to the cable longitudinal direction (K).

12. Gangway connection system (2) according to the preceding claim, **characterized in that** the abutment face (36) is inclined at an angle (W) of at least 65° and no more than 85° with reference to the cable longitudinal direction (K).

13. Gangway connection system (2) according to either of Claims 11 or 12, **characterized in that** the clamping part (10) comprises a height (H) and the abutment surface (36) extends over at least 15% of the height (H) and no more than over 50% thereof.

14. Gangway connection system (2) according to either of Claims 11 or 13, **characterized in that** the outer surface (34) comprises two abutment surfaces (36) which are set in two opposing directions.

15. Clamping part for a gangway connection system (2) according to at least one of the preceding claims which comprises at least one feedthrough (20a, 20b) for the power cable (6), **characterized in that**
the feedthrough (20a, 20b) extends along a longitudinal axis (L) and between an inlet opening (22a) and an outlet opening (22b) and comprises a longitudinal sectional profile, having an inner and an outer longitudinal sectional contour (24a, 24b), wherein at least one of the longitudinal sectional contours (24a, 24b) is curved at least in portions, or **in that** the power cable (6) extends in a helical manner in a cable longitudinal direction (K) and the clamping part (10) comprises an outer surface (34) which points in the cable longitudinal direction (K), having at least one abutment surface (36) for the power cable (6) which extends at an angle with respect to the cable longitudinal direction (K).

## Revendications

1. Système de raccordement entre wagons (2) pour guider au moins un câble d'alimentation (6), avec une partie de serrage (10) qui présente au moins un passage (20a, 20b) pour le câble d'alimentation (6), le passage (20a, 20b) s'étendant le long d'un axe longitudinal (L) et entre une ouverture d'entrée (22a) et une ouverture de sortie (22b) et présentant un profil en coupe longitudinale avec un contour en coupe longitudinale intérieur et un contour en coupe longitudinale extérieur (24a, 24b), au moins l'un des contours en coupe longitudinale (24a, 24b) étant au moins en partie courbe, et
l'au moins un contour en coupe longitudinale (24a, 24b) présentant au moins en partie un rayon de courbure (R1, R2) qui correspond à un rayon de courbure du câble d'alimentation (6).

2. Système de raccordement entre wagons (2) selon la revendication précédente, **caractérisé en ce que** le câble d'alimentation (6) est en forme d'hélice.

3. Système de raccordement entre wagons (2) selon l'une quelconque des revendications précédentes, **caractérisé en ce que** pour l'au moins un câble d'alimentation (6), deux passages (20a, 20b) sont réalisés avec des profils en coupe longitudinale différents, à savoir un premier passage (20a) et un deuxième passage (20b).

4. Système de raccordement entre wagons (2) selon l'une quelconque des revendications précédentes, **caractérisé en ce que** l'au moins un contour en coupe longitudinale (24a, 24b) présente au moins en partie un rayon de courbure (R5, R5') qui correspond à un rayon de courbure minimal prédéfini du câble d'alimentation (6) ou qui permet une allure du câble d'alimentation (6) avec le rayon de courbure minimal prédéfini.

5. Système de raccordement entre wagons (2) selon l'une quelconque des revendications précédentes, **caractérisé en ce que** les deux contours en coupe longitudinale (24a, 24b) sont courbés sur une première portion dans la même direction et sont courbés sur une deuxième portion dans une direction opposée.

6. Système de raccordement entre wagons (2) selon l'une quelconque des revendications précédentes, **caractérisé en ce que** le passage (20a, 20b) présente une portion de fixation (26) pour la fixation du câble d'alimentation (6) et, sur la portion de fixation (26), un diamètre (D2) qui correspond essentiellement au diamètre (D1) du câble d'alimentation.

7. Système de raccordement entre wagons (2) selon la revendication précédente, **caractérisé en ce que** la portion de fixation (26) est réalisée à la manière d'un cylindre courbe.

8. Système de raccordement entre wagons (2) selon l'une quelconque des deux revendications précédentes, **caractérisé en ce que** la portion de fixation (26) s'étend au moins sur un quart de la longueur (L2) du passage (20a, 20b) et au maximum sur la moitié de celle-ci.

9. Système de raccordement entre wagons (2) selon l'une quelconque des revendications précédentes, **caractérisé en ce qu'**une portion de sortie (28) se raccorde à l'ouverture de sortie (22b), laquelle est réalisée à la manière d'un entonnoir et le passage (20a, 20b) présente à cet effet sur la portion de sortie (28) un diamètre (D2) qui augmente dans la direction de l'ouverture de sortie (22b).

10. Système de raccordement entre wagons (2) selon la revendication précédente, **caractérisé en ce que** le passage (20a, 20b) présente, en continu sur la portion de sortie (28), une section transversale circulaire.

11. Système de raccordement entre wagons (2) pour le guidage d'au moins un câble d'alimentation (6), en particulier selon l'une quelconque des revendications précédentes, comprenant une partie de serrage (10) qui présente au moins un passage (20a, 20b) pour le câble d'alimentation (6), **caractérisé en ce que** le câble d'alimentation (6) s'étend en forme d'hélice dans une direction longitudinale du câble (K) et la partie de serrage (10) présente une surface extérieure (34) tournée dans la direction longitudinale du câble (K), avec au moins une surface d'appui (36) pour le câble d'alimentation (6) qui s'étend de manière inclinée par rapport à la direction longitudinale du câble (K) .

12. Système de raccordement entre wagons (2) selon la revendication précédente, **caractérisé en ce que** la surface d'appui (36) est inclinée par rapport à la direction longitudinale du câble (K) suivant un angle (W) d'au moins 65° et d'au plus 85°.

13. Système de raccordement entre wagons (2) selon l'une quelconque des revendications 11 et 12, **caractérisé en ce que** la partie de serrage (10) présente une hauteur (H) et la surface d'appui (36) s'étend sur au moins 15 % de la hauteur (H) et au maximum sur 50 %.

14. Système de raccordement entre wagons (2) selon l'une quelconque des revendications 11 et 13, **caractérisé en ce que** la surface extérieure (34) présente deux surfaces d'appui (36) inclinées dans des directions opposées.

15. Partie de serrage pour un système de raccordement entre wagons (2) selon au moins l'une des revendications précédentes, qui présente au moins un passage (20a, 20b) pour le câble d'alimentation (6), **caractérisée en ce que** le passage (20a, 20b) s'étend le long d'un axe longitudinal (L) et entre une ouverture d'entrée (22a) et une ouverture de sortie (22b) et présente un profil en coupe longitudinale avec un contour en coupe longitudinale intérieur et un contour en coupe longitudinale extérieur (24a, 24b), au moins l'un des contours en coupe longitudinale (24a, 24b) étant au moins en partie courbe, ou **en ce que** le câble d'alimentation (6) s'étend sous forme hélicoïdale dans une direction longitudinale du câble (K) et la partie de serrage (10) présente une surface extérieure (34) tournée dans la direction longitudinale du câble (K), avec au moins une surface d'appui (36) pour le câble d'alimentation (6) qui s'étend de manière inclinée par rapport à la direction longitudinale du câble (K) .
